(19) Europäisches Patentamt

European Patent Office

Office européen des brevets

(11) EP 1 698 913 A1

(12) **EUROPÄISCHE PATENTANMELDUNG**

(43) Veröffentlichungstag:
06.09.2006 Patentblatt 2006/36

(51) Int Cl.:
*G01V 3/08* $^{(2006.01)}$

(21) Anmeldenummer: 05004448.6

(22) Anmeldetag: **01.03.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(71) Anmelder: **Androtech GmbH
5108 Oberflachs (CH)**

(72) Erfinder: **Muench, Ralph K.
8957 Spreitenbach (CH)**

(74) Vertreter: **Troesch Scheidegger Werner AG
Schwäntenmos 14
8126 Zumikon (CH)**

(54) **Verfahren zur Bestimmung der Position eines Sensorelementes mit Hilfe eines magnetischen Wechselfeldes**

(57) Die Erfindung betrifft ein Verfahren zur Bestimmung der Position eines Sensorelementes (300), mit Hilfe dessen ein von mindestens einer Generatoreinheit (200) ausgesendetes magnetisches Wechselfeld (210) gemessen wird, wobei bei dem Verfahren aufgrund eines im Sensorelement (300) empfangenen Signals die Position des Sensorelementes (300) bestimmt wird, Störfelder (410) berechnet werden, welche aufgrund von in elektrisch leitenden Objekten (400) erzeugten Wirbelströmen (420) entstehen, die Position, welche ausgehend vom im Sensorelement (300) empfangenen Signal bestimmbar ist, aufgrund der berechneten Störfelder (410) korrigiert wird, die Wirbelströme (420) im Objekt (400) berechnet werden, die Störfelder (410), ausgehend von den berechneten Wirbelströmen (420) berechnet werden-Erfindungsgemäss wird zumindest ein Bereich des Objekts (400) in zumindest nahezu geschlossene Maschen ($M_i$) von ansonsten beliebiger Form aufgeteilt, wird den geschlossenen Maschen ($M_i$) jeweils mindestens ein Widerstandswert ($R_{ij}$) zugeordnet wird und werden auf der Grundlage der in den den geschlossenen Maschen ($M_i$) abfallenden Spannungen und der Widerstandswerte ($R_{ij}$) beispielsweise mit Hilfe der Kirchhoffschen Maschenregel die Wirbelströme (420) in den geschlossenen Maschen ($M_i$) berechnet.

Fig. 1

**Beschreibung**

Die vorliegende Erfindung betrifft ein Verfahren nach dem Oberbegriff des Patentanspruchs 1, eine Anwendung des Verfahrens, eine Vorrichtung zur Durchführung des Verfahrens sowie ein Computerprogrammprodukt.

Bei zahlreichen technischen und medizinischen Verfahren ist die genaue Kenntnis der Position eines bestimmten Gegenstandes von entscheidender Bedeutung. Währenddem in der Medizin die Position von einzelnen Gewebeteilen - beispielsweise eines Tumors, der zur Zerstörung oder zur Wachstumsbegrenzung bestrahlt werden soll - bestimmt werden muss, ist die generelle Problematik der Positionserfassung zur Eingabe in ein Computersystam, beispielsweise für "Cyber Space"-Anwendungen, von allgemeiner Bedeutung. Eine solche Positionserfassungs- bzw. Positionseingabeeinheit wird in diesen Anwendungen auch etwa als dreidimensionale Maus bezeichnet.

Eine bekannte Vorrichtung bzw. ein bekanntes Verfahren zur Bestimmung der Position ist in der internationalen Patentanmeldung mit der Veröffentlichungsnummer WO 97/36192 beschrieben. Gemäss der bekannten Lehre ist es vorgesehen, ein Wechselfeld mit Hilfe einer Feldgeneratoreinheit aufzubauen, wobei je nach der Anzahl Freiheitsgrade eines Sensorelementes, dessen Position bestimmt werden soll, mehrere Wechselfelder einander überlagert und/oder zeitlich nacheinander erzeugt werden.

Mit Hilfe einer Verarbeitungs- und Steuereinheit, welche die Feldgeneratoreinheit einerseits steuert, anderseits die vom Sensorelement empfangenen Signale verarbeitet, wird die Position und gegebenenfalls die Lage der Sensoreinheit bestimmt. Der Inhalt der vorstehend genannten Veröffentlichung bildet diesbezüglich integrierender Bestandteil dieser Beschreibung.

Es hat sich gezeigt, dass bei einer magnetfeldbasierten Ortung, wie sie beispielsweise bei der bekannten Lehre gemäss WO 97/36192 angewandt wird, in benachbarten, elektrisch leitenden Objekten Wirbelströme erzeugt werden. Diese führen zu Verzerrungen des ursprünglichen magnetischen Wechselfeldes und damit zu systematischen Fehlern. Das bedeutet, dass, wenn Position und Ausrichtung von Sensorelementen im verzerrten Wechselfeld so bestimmt werden, als wäre kein elektrisch leitendes Objekt zugegen, die gewonnenen Werte systematisch verfälscht sind.

Ein Verfahren zur Kompensation von Störeffekten, welche durch leitende Objekte hervorgerufen werden, ist unter dem Namen "Distortion Mapping" bekannt. Dieses Verfahren wird beispielsweise im Aufsatz mit dem Titel "Calibration of Tracking Systems in a Surgical Environment" (Birkfellner et. al., IEEE Trans Med Imaging, Vol. 17(5), Seiten 737 bis 742, 1998) beschrieben. Beim bekannten Verfahren wird die Position und die Orientierung eines Sensorelementes ebenfalls mit Hilfe eines Positionsmesssystems, das auf einer magnetfeldbasierten Ortung beruht, vorgenommen, wobei zur Kompensation von Störeffekten ein zweites Positionsmesssystem vorgesehen ist, welches durch elektrisch leitende Objekte nicht beeinflussbar ist. Die Differenz zwischen den mit den beiden Positionsmesssystemen ermittelten Positionen und Orientierungen werden in der Folge zur Korrektur der mit Hilfe des magnetfeldbasierten Positionsmesssystems bestimmten Position und Orientierung verwendet. Das bekannte Verfahren weist jedoch den Nachteil auf, dass, zur Erreichung einer hohen Genauigkeit, die Positions- und Orientierungsdifferenz an möglichst vielen Punkten gemessen werden muss. Um weitere Punkte zu erhalten, muss zusätzlich ein aufwendiges Interpolationsverfahren angewendet werden. Der sehr hohe Aufwand wird insbesondere durch das folgende Beispiel deutlich: Soll ein Volumen von 1 $m^3$ vermessen werden, wobei dies in den drei Achsen in je 10 Positionen und in zehn verschiedenen Orientierungswinkeln geschehen soll, so erhält man 10'000 Punkte. Darüber hinaus ist das erwähnte zweite Positionsmesssystem erforderlich.

Aus der WO 02/08793 ist ein gattungsgemässes Verfahren bekannt, bei dem zur Berechnung des Störfeldes in einem ersten Schritt die Wirbelströme bestimmt werden und in einem zweiten Schritt die Berechnung des durch die Wirbelströme erzeugten Störfelds erfolgt. Zur Bestimmung der Wirbelströme werden zunächst die elektrisch leitenden Objekte in Segmente und Stützstellen aufgeteilt. In einem weiteren Schritt werden in den Stützstellen die Stromdichten über das Induktionsgesetz ermittelt und somit die Wirbelströme bestimmt.

Nachteilig an diesem Verfahren ist, dass zur Berechnung der Wirbelströme ein relativ grosser Rechenaufwand erforderlich ist, der wiederum mit einem hohen Zeitbedarf bei der numerischen Durchführung des Verfahrens verbunden ist.

Der vorliegenden Erfindung liegt die Aufgabe zugrunde, ein Verfahren anzugeben, welches die oben genannten Nachteile nicht aufweist.

Diese Aufgabe wird durch die Merkmale des kennzeichnenden Teils des Patentanspruchs 1 gelöst.

Bei dem Verfahren wird zumindest ein Bereich des Objekts in zumindest nahezu geschlossene Maschen von beliebiger Form aufgeteilt, wird den geschlossenenen Maschen jeweils mindestens ein Widerstandswert zugeordnet und werden auf der Grundlage der in den den geschlossenen Maschen abfallenden Spannungen und der Widerstandswerte beispielsweise mit Hilfe der Kirchhoffschen Maschenregel die Wirbelströme in den geschlossenen Maschen berechnet.

Vorteilhafte Ausgestaltungen der Erfindung, eine Anwendung des Verfahrens, eine Vorrichtung zur Durchführung des Verfahrens sowie ein Computerprogrammprodukt sind in weiteren Ansprüchen angegeben.

Mit dem erfindungsgemässen Verfahren wird es ermöglicht, den Rechenaufwand im Vergleich zu bekannten Verfahren erheblich zu reduzieren ohne dabei die Genauigkeit der Positionsbestimmung zu verringern.

Die Erfindung wird nachfolgend anhand von Zeichnungen beispielsweise näher erläutert. Dabei zeigen

Fig. 1 eine bekannte Anordnung, bestehend aus Feldgeneratoreinheit, Sensorelement und Verarbeitungs- und Steuereinheit, in schematischer Darstellung, mit einem elektrisch leitenden Objekt,

Fig. 2 eine schematische Teilansicht zur Wahl der Stützpunkte und deren Verbindung zu Maschen,

Fig. 3 ein Ersatzschaltbild für einige Maschen,

Fig. 4 ein Flussdiagramm mit einigen Verfahrensschritten des erfindungsgemässen Verfahrens,

Fig. 5 das elektrische Feld eines magnetischen Dipols, in schematischer Darstellung, und

Fig. 6 das von einem veränderlichen Linienstrom induzierte elektrische Feld, in schematischer Darstellung.

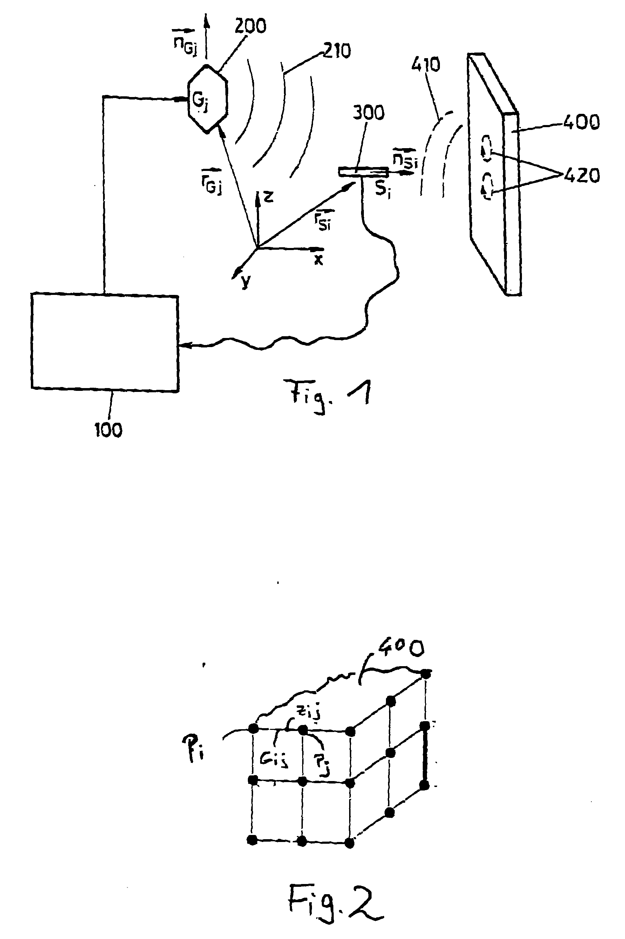

In Fig. 1 ist eine bekannte Anordnung, bestehend aus einer Feldgeneratoreinheit 200, einem Sensorelement 300 und einer Verarbeitungs- und Steuereinheit 100, dargestellt. Die Verarbeitungs- und Steuereinheit 100 ist jeweils über Leitungen mit der Feldgeneratoreinheit 200 einerseits und dem Sensorelement 300 anderseits verbunden, diese Verbindungen können auch drahtlos z.B. via Funk erfolgen. Während sich die Feldgeneratoreinheit 200 vorzugsweise an einem bekannten Ort befindet - was bedeutet, dass die Koordinaten x, y, z, inkl. der Ausrichtung im Koordinatensystem, bekannt sind - kann das Sensorelement 300 beliebig bewegt werden bzw. eine beliebige Position und Orientierung einnehmen. Es wird darauf hingewiesen, dass es denkbar ist, wie bereits aus der WO 97/36192 bekannt ist, dass das Sensorelement 300 ortsfest und die Feldgeneratoreinheit 200 frei, d.h. im Rahmen der zur Verfügung gestellten Verbindungsleitung zur Verarbeitungs- und Steuereinheit 100, beweglich ist. Des weiteren ist auch ohne weiteres denkbar, dass die Verarbeitungs- und Steuereinheit 100 in mehreren Funktionseinheiten realisiert ist, wie zum Beispiel, dass die Steuereinheit zur Steuerung der Feldgeneratoreinheit 200 in einem Funktionsblock und die Verarbeitungseinheit, in der die eigentliche Positionsberechnung der Position des Sensorelementes 300 vorgenommen wird, in einem anderen Funktionsblock realisiert ist. Diese Abwandlungen von der in Fig. 1 dargestellten Anordnung haben keinen Einfluss auf die Anwendbarkeit des erfindungsgemässen Verfahrens. Das Gleiche gilt auch für Ausführungsformen, bei denen mehrere Feldgeneratoren an unterschiedlichen Stellen vorgesehen sind, wie dies beispielsweise bei der Lehre gemäss WO 97/36192 der Fall ist.

Mit 400 ist in schematischer Darstellung ein elektrisch leitendes Objekt stellvertretend für diejenigen Gegenstände dargestellt, welche die magnetische Ortung des Sensorelementes 300 stört, indem im Objekt 400 Wirbelströme 420 erzeugt werden, aufgrund derer ein dem Wechselfeld 210 überlagerten Störfeld 410 entsteht.

Bevor auf das erfindungsgemässe Verfahren näher eingegangen wird, werden im folgenden zunächst allgemeine Zusammenhänge bzw. Vorgehensweisen bei der magnetfeldbasierten Ortung erläutert.

Wie bereits erwähnt wurde, wird bei der magnetfeldbasierten Ortung, welche auch etwa als magnetische Ortung bezeichnet wird, die Position und/oder Ausrichtung von einem oder mehreren Sensorelementen 300 relativ zu einem oder mehreren Feldgeneratoreinheiten 200 bestimmt. Die Position $\bar{r}_{S_i}$ und Orientierung $\hat{n}_{S_i}$ der Sensorelemente S, kann durch Lösung des folgenden Gleichungssystems bestimmt werden, wenn man voraussetzt, dass Position $r_{Gj}$ und Orientierung $r_{Gj}$ der Feldgeneratoreinheiten $G_j$ bekannt sind:

$$F_{ij} = F(\bar{r}_{S_i}, \bar{n}_{S_i}, \bar{r}_{G_j}, \bar{n}_{G_j}) \qquad (1)$$

Mit i ist das i-te Sensorelement und mit j die j-te Feldgeneratoreinheit gemeint. F ist dabei eine vom Magnetfeld abhängige Messfunktion von meistens einer Komponente des Magnetfelds B($x,y,z,t$) (z.B. die induzierte Spannung in einer Sensorspule). F kann natürlich auch eine Funktion von vielen zusammengebauten Sensoren in einem Sensorelement sein, welches mehrere oder alle Komponenten gleichzeitig misst.

Nach Art der Lösung dieses Gleichungssystems können magnetische Positionssysteme in zwei Klassen unterteilt werden:

I. Das Gleichungssystem wird invertiert, d.h. die Sensorelementpositionen können aus den gemessenen Magnetfeldern berechnet werden:

$$\vec{r}_{S_i} = f_r(F_{ij}) \quad und \quad \vec{n}_{S_i} = f_n(F_{ij}) \qquad (2)$$

Da die Inversion des Gleichungssystems nur in sehr speziellen Fällen möglich ist, kann man durch Näherung versuchen, die Feldgleichungen in eine invertierbare Form zu bringen.

II. Das Gleichungssystem wird durch Optimierung gelöst, d.h. die Sensorelementpositionen werden so lange variiert, bis die nach Gleichung 1 berechneten Werte $F_{ij}$ am besten mit den gemessenen Werten $F_{ij}^M$ übereinstimmen. Eine mögliche Methode wäre ein Chi$^2$-Fit nach Levenberg-Marquardt. Dabei werden die Sensorpositionen $\vec{r}_{S_i}$, und $\vec{n}_{S_i}$ so lange variiert bis

$$Chi^2(\vec{r}_{S_i}, \vec{n}_{S_i}) = \sum_j \frac{(F_{ij} - F_{ij}^M)^2}{(\Delta F_{ij}^M)^2} \qquad (3)$$

minimal wird. Für weiterführende Angaben zur Methode nach Levenberg-Marquardt wird stellvertretend auf die Druckschrift mit dem Titel "Numerical Recipies in C" (W. H. Press, S. A. Teukolsky, W. T. Vetterling und B. P. Flannery; Cambridge university Press; 1994) verwiesen.

Es ist auch eine Kombination beider Lösungsansätze möglich.

Da die vom Sensorelement $S_i$ gemessene Grösse $F_{ij}$ nur von der relativen Lage vom Sensorelement Si und der Feldgeneratoreinheit $G_j$ abhängt, sind die Rollen von Sensorelement und Feldgeneratoreinheit in allen magnetischen Positionsmesssystemen austauschbar.

Werden zeitlich variierende magnetische Felder benützt, so erzeugen diese - wie bereits erwähnt wurde - in benachbarten, elektrisch leitenden Objekten 400 Wirbelströme 420. Diese führen zu Verzerrungen des ursprünglichen magnetischen Wechselfeldes 210 und damit zu systematischen Fehlern bei der Positionsbestimmung. Das bedeutet, dass, wenn Position und Ausrichtung von Sensorelementen im verzerrten Wechselfeld so bestimmt werden, als wäre kein elektrisch leitendes Objekt 400 zugegen, die gewonnenen Werte systematisch verfälscht sind.

Um das Verfahren der magnetischen Ortung auch in der Nachbarschaft von elektrisch leitenden Objekten 400 frei von durch diese hervorgerufenen Fehlern anwenden zu können, werden die Wechselfeldverzerrungen und ihr Einfluss auf die Bestimmung von Sensorelementposition und Sensorelementausrichtung bestimmt. Damit können die auftretenden systematischen Fehler korrigiert werden, womit die Genauigkeit der Position und/oder der Ausrichtung erheblich verbessert werden kann.

Im folgenden werden Überlegungen betreffend die Berechnung von Feldverzerrungen bei einer leitende Platte dargestellt. Die daraus resultierenden Ergebnisse können analog bei beliebigeren Objektformen angestellt werden.

Befindet sich in einem zeitlich veränderlichen Magnetfeld $B_0(x,y,z,t)$ ein elektrisch leitendes Objekt 400, so werden Wirbelströme 410 (Fig. 1) in die Oberfläche des Objektes 400 induziert. Diese Wirbelströme 410 verursachen ein weiteres Magnetfeld $B'(x,y,z,t)$, welches dem ursprünglichen Feld $B_0(x,y,z,t)$ überlagert ist und zu einem resultierenden Feld $B_{Res}(x,y,z,t)$ führt. $B_{Res}(x,y,z,t)$ ist gegenüber dem Feld $B_0(x,y,z,t)$ verzerrt. Um dieses verzerrte Feld berechnen zu können, ist es notwendig, das induzierte Wechselfeld $B'(x,y,z,t)$ zu kennen. Es lässt sich in bekannter Weise z.B aus dem Biot-Savart Gesetz der Elektrodynamik aus den Wirbelströmen ein Feld $B_1(x,y,z,t)$ berechnen, welches gut genug $B'(x,y,z,t)$ beschreibt.

Die Feldverzerrungen werden also in zwei Schritten berechnet.

Der erste Schritt ist die Bestimmung der Wirbelströme 410 und der zweite Schritt ist die Berechnung eines durch die Wirbelströme 410 erzeugten Störfelds $B_1(x,y,z,t)$, welches gut genug das Störfeld $B^r(x,y,z,t)$ beschreibt.

Bei der vorliegenden Erfindung wird das Objekt 400 bzw. ein Bereich oder werden mehrere Bereiche des Objekts 400 gewissermassen in Schaltkreise aus beispielsweise Widerständen, Induktivitäten und Kapazitäten aufgeteilt, auf welche physikalische Gesetze und Formeln angewendet werden, um daraus die Wirbelströme 420 zu berechnen.

Im folgenden werden Ausführungsformen des erfindungsgemässen Verfahrens näher erläutert, wobei der Einfachheit halber davon ausgegangen wird, dass das Objekt 400 aus einer elektrisch leitenden Platte, d.h. aus einer flachen und begrenzten Fläche, besteht. Objekte 400, die wesentlich von der Form einer Platte abweichen oder sehr grosse Ausdehnungen besitzen, können ebenfalls mit dem erfingungsgemässen Verfahren behandelt werden.

Es wird darauf hingewiesen, dass die folgenden Formeln im internationalen MKS -Einheitensystem gelten und in diesem Text alle in der Form vorliegen, in der sie für Vakuum gelten. Korrekturen für Luft und andere Materialien können angebracht werden, sind aber in der Regel nicht notwendig. Auch Korrekturen zur Berücksichtigung der endlichen Ausbreitungsgeschwindigkeit des Lichts (retardierte Zeit etc.) könnten erfolgen.

Ferner wird darauf hingewiesen, dass in diesem Text die folgende Gleichung als dritte Maxwellgleichung

$$\oint_L \bar{E}\,d\bar{s} = -\frac{d}{dt}\left(\int_A \bar{B}\,d\bar{A}\right) \qquad (\text{M3})$$

und die nachstehende Gleichung als vierte Maxwellgleichung bezeichnet wird.

$$\oint_L \bar{B}\,d\bar{s} = \mu_0 \int_A \bar{j}\,d\bar{A} + \mu_0 \varepsilon_0 \frac{d}{dt}\left(\int_A \bar{E}\,d\bar{A}\right) \qquad (\text{M4})$$

Als erster Schritt des erfindungsgemässen Verfahrens werden, wie in Figur 2 dargestellt, auf der Oberfläche des Objekts 400 Stützpunkte $P_i$, $P_j$ beliebig gewählt. Die Wahl der Stützpunkte $P_i$, $P_j$ auf der Oberfläche des Objekts 400 ist zulässig, da die Wirbelströme 420 nur geringfügig in die Oberfläche eindringen. Die Tiefe eines dreidimensionalen Objektes 400 ist deshalb nicht relevant. Auch müssen sehr weit entfernt vom Feldgenerator 200, wo das Feld schwach ist, keine Punkte $P_i$, $P_1$ gewählt werden insbesondere wenn das Objekt 400 eine grosse Ausdehnung hat, d.h. es reicht unter Umständen aus, nur in einem Teilbereich des Objekts Punkte zu wählen. Die Anzahl der Stützpunkte $P_1$, $P_1$ hängt von der verlangten Genauigkeit ab. Die Stützpunkte $P_i$, $P_j$ werden durch gedachte verbindungsstrecken $G_{ij}$ derart paarweise miteinander verbunden, dass sich beispielsweise geschlossene Maschen $M_i$ bilden. Im gezeigten Beispiel handelt es sich bei den Maschen $M_i$ um Vierecke. In diesem Text wird unter dem Begriff "Masche" eine zumindest nahezu geschlossene Strecke verstanden. Im nächsten Schritt wird auf oder in der Nähe jeder Verbindungsstrecke $G_{ij}$ mindestens ein beliebiger Zuordnungspunkt $Z_{ij}$ gewählt und den Zuordnungspunkten $Z_{ij}$ jeweils ein Widerstandswert $R_{ij}$ zugeordnet, wobei sich der Widerstandswert $R_{ij}$ in bekannter Weise aus den physikalischen Eigenschaften des Objekts 400 und der Lage der Endpunkte $P_i$, $F_j$ der Verbindungsstrecken $G_i$, ergibt. Die Bestimmung der Widerstände $R_{1j}$ z.B. kann beispielsweise anhand der Länge, der Eindringtiefe des Wirbelstroms und den elektrischen Eigenschaften des elektrisch leitenden Objektes bestimmt werden. Es ist auch denkbar, Induktivitäten und Kapazitäten einzuführen, obwohl dies oft nicht notwendig ist, da das Verfahren allein unter Berücksichtigung der Widerstände in vielen Fällen eine hinreichend gute Berechnung der Wirbelströme liefert.

Es wird darauf hingewiesen, dass die Zuordnungspunkte $Z_{ij}$ nicht zwingend auf den Verbindungsstrecken $G_{ij}$ liegen müssen. Es reicht aus, wenn die Zuordnungspunkte $Z_{ij}$ zumindest nahezu auf den Verbindungsstrecken $G_{ij}$ oder in der Nähe der Verbindungsstrecken liegen.

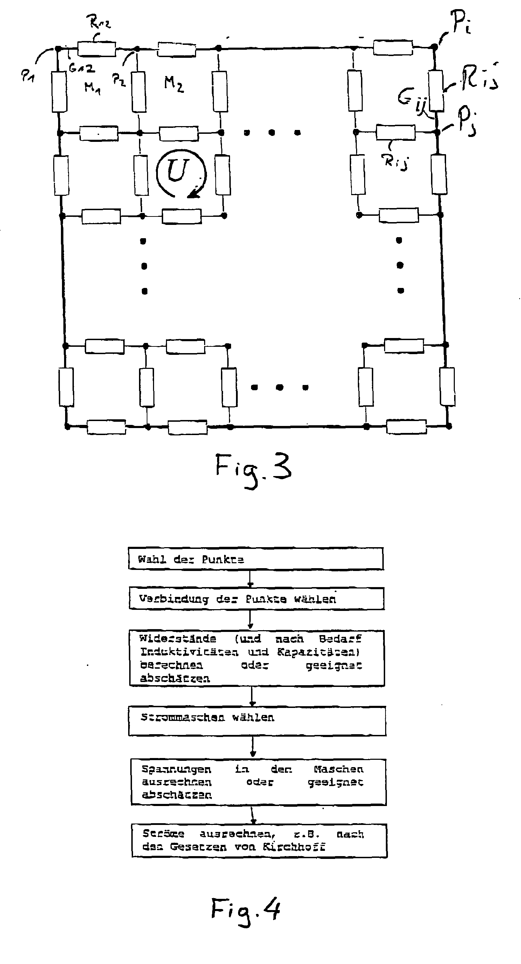

In Figur 3 ist ein Ersatzschaltbild für einige Maschen $M_i$ dargestellt, bei dem die Stützpunkte $P_i$, $P_j$ wiederum so gewählt und miteinander verbunden wurden, dass die einzelnen Verbindungsstrecken $G_{ij}$ ein Netz aus rechteckigen Maschen $M_i$ bilden. Der Widerstandswert $R_{ij}$, der den einzelnen Zuordnungspunkten $Z_{ij}$ zugeordnet wird, ist mit dem bekannten Schaltzeichen für elektrische Widerstände symbolisch dargestellt.

In einem weiteren Schritt werden die Spannungsabfälle in den Maschen $M_1$ berechnet.

Es wird darauf hingewiesen, dass die Rechtecksform der Maschen $Mi$ nur ein Beispiel darstellt. Die Stützpunkte können selbstverständlich beliebig gewählt und zu Maschen $M_i$ irgendeiner anderen Form, z.B. Dreiecks- Fünfecksform oder einem Gemisch von Formen miteinander verbunden werden. Des weiteren wird darauf hingewiesen, dass auch nicht gerade Verbindungsstrecken $G_{ij}$ denkbar wären. Ferner wird darauf hingewiesen, dass es nicht erforderlich ist, dass die Stützpunkte $P_i$, $P_j$ einer Masche $M_1$ in einer Ebene angeordnet sind.

Zur Berechnung der angesprochnen Spannungsabfälle in den Maschen $M_i$ infolge des von der Generatoreinheit 200 erzeugten Wechselfeldes über die Verbindungsstrecken $G_{ij}$ einer Masche $M_i$ existieren verschiedene Lösungen, die nachstehend erläutert werden.

Erste Methode zur Berechnung des Spannungsabfalls über die Verbindungsstrecken einer Masche

Die erste Methode basiert auf der Verwendung des Induktionsgesetzes.

Es gilt für jede Masche:

$$U = -\frac{d}{dt}\left(\int_A \vec{B}d\vec{A}\right) \quad (4)$$

worin

B= von der Generatoreinheit 200 erzeugtes magnetischen Erregerfeld.

A= von der Masche eingeschlossene Fläche.

Dieses Integral kann auf verschiedenste numerische Arten berechnet werden wobei es häufig ausreicht, dieses Integral mit dem Skalarprodukt des Flächsnnormalenvektors mit der zeitlichen Flussänderung $\frac{d}{dt}\vec{B}$ multipliziert mit dem Betrag der Fläche anzunähern. Ist die Spannung in den Maschen bekannt, werden die Wirbelströme in bekannter weise ausgerechnet. Hinsichtlich Details zur Berechnung der Wirbelströme wird auf die Fachliteratur verwiesen (siehe z.B Kupfmüller, K; "Theoretische Elektrotechnik und Elektronik", erschienen im Springer Verlag, Heidelberg und Berlin).

Bei den nachstehend erläuterten Methoden erfolgt die Berechnung des Spannungsabfalls indirekt über die Berechnung des elektrischen Feldes und der Definition der Spannung zwischen zwei Punkten:

$$U_{ij} = -\int_{P_i}^{P_j}\vec{E}d\vec{s}$$

Dieses Integral lasst sich annähern mit:

$$U_{ij} = -\vec{E}\Delta\vec{s}$$

wobei $E$ in einem beliebigen Punkt $Z_{ij}$ auf oder entlang oder in der Nähe der Verbindungsstrecke $G_{ij}$ berechnet wird und $\Delta s$ den Vektor von Punkt $P_i$ zu Punkt $P_j$ darstellt. Die Strecke kann aber auch in mehreren Teilstrecken $\Delta s_k$ unterteilt werden und es können mehrere Stützpunkte Zijk verwendet werden, wobei dann über alle zu summieren ist.

$$U_{ij} = -\sum_{k=1}^{N_k}\vec{E}_k\Delta\vec{s}_k$$

Sind die Spannungen bekannt, werden die Wirbelströme, die entlang der Verbindungsstrecken $G_{ij}$ fliessen, in bekannter Weise z.B. nach den Gesetzen von Kirchhoff ausgerechnet. (siehe z.B. Kupfmüller, K: "Theoretische Elektrotechnik und Elektronik", erschienen im Springer Verlag, Heidelberg und Berlin).

Es wird darauf hingewiesen, dass das zu berechnende elektrische Feld nicht ausschliesslich von der Generatoreinheit (200) stammmen muss. Sollten eventuell weitere (nicht dargesetellte) Erzeuger von elektrischen Feldern vorhanden sein, können auch die von diesen Erzeugern generierten elektrischen Felder bei den Berechnungen berücksichtigt werden.

Zweite Methode zur Berechnung des Spannungsabfalls über die Verbindungsstrecken einer Masche

Bei der zweiten Methode wird das elektrische Feld unter Berücksichtigung der Symmetrie der dritten und der vierten Maxwellgleichung berechnet. Ferner wird bei der Berechnung des von der Generatoreinheit 200 erzeugten magnetischen Erregerfeldes eine Formel zugrunde gelegt, die neben dem Biot-Savart-Term den zusätzlichen Term enthält, durch welchen berücksichtigt wird, dass der elektrische Feldaufbau auch ein Magnetfeld erzeugt.

Das Biot-Savart-Gesetz lautet:

$$\bar{B}(P) = \frac{\mu_0}{4\pi} \int_L \frac{I \overline{dS} \times \bar{r}}{r^3} \qquad (5)$$

worin

P: Punkt im Raum, wo das elektrische Feld auszurechnen ist,

$\mu_v$: Magnetfeldkonstante = $4\pi*10^{-7}$ Tm/A

L: Länge des Leiters in der Generatoreinheit in dem der Strom fliesst, der das elektrische Wechselfeld erzeugt

$\overline{dS}$ Vektor in Richrung des Stroms durch L

r Vektor der von $\overline{dS}$ nach P zeigt.

I : Strom in L an der Position von $\overline{dS}$

Der Strom I im Leiter ist über den Leiterquerschnitt zu berechnen und ist gegeben durch

$$I = \int_A \bar{j} \, d\bar{A}$$

wobei:

j :elektrische Stromdichte

A: Querschnitt durch den Leiter

Die Berechnung des von der Generatoreinheit 200 erzeugten magnetischen Feldes erfolgt nun durch die folgende Formel

$$\bar{B} = \frac{\mu_0}{4\pi} \int \frac{\left( \int_A \bar{j} \, d\bar{A} \right) \overline{dS} \times \bar{r}}{r^3} + \frac{\mu_0 \varepsilon_0}{4\pi} \int \frac{\frac{d}{dt}\left( \int_A \bar{E} \, d\bar{A} \right) \overline{dS} \times \bar{r}}{r^3} \qquad (6)$$

die rechts des Gleichheitszeichens neben einem ersten Term, welcher das bekannte Biot-Savart-Gesetz beschreibt, einen weiteren Term enthält, welcher berücksichtigt, dass das magnetische Feld des Feldgenerators auch von einem eventuellen elektrischen Feldaufbau des Feldgenerators abhängt und nicht nur von den fliessenden Erregerströmen.

Aus der Symmetrie zweier Maxwell-Gleichungen folgt, dass man ebenso das induzierte elektrische Feld in jedem Raumpunkt berechnen kann und zwar mittels des Integrals:

$$\bar{E}(P) = -\frac{1}{4\pi} \int \frac{\frac{d}{dt}\left( \int_S \bar{B} \, d\bar{A} \right) \overline{dS} \times \bar{r}}{r^3} \qquad (7)$$

Hierbei ist über den gesamten betrachteten Raum zu integrieren. Hierzu stellt man sich vor, dass über "Schläuche" integriert wird, die z.B. parallel zu den magnetischen Feldlinien verlaufen. Liegen die Schläuche dicht nebeneinander und/oder haben z.B einen quadratischen Querschnitt, füllen sie so gut wie den gesamten Raum aus. Das Integral kann auf verschiedenste numerische Arten berechnet werden.

Dritte Methode zur Berechnung des Spannungsabfalls über die Verbindungsstrecken einer Masche

Bei der dritten Methode wird davon ausgegangen, dass das Wechselfeld 210 von einer Spule in der Generatoreinheit 200 erzeugt wird. Die Spule wird zur Vereinfachung der Rechnung als Dipol aufgefasst.

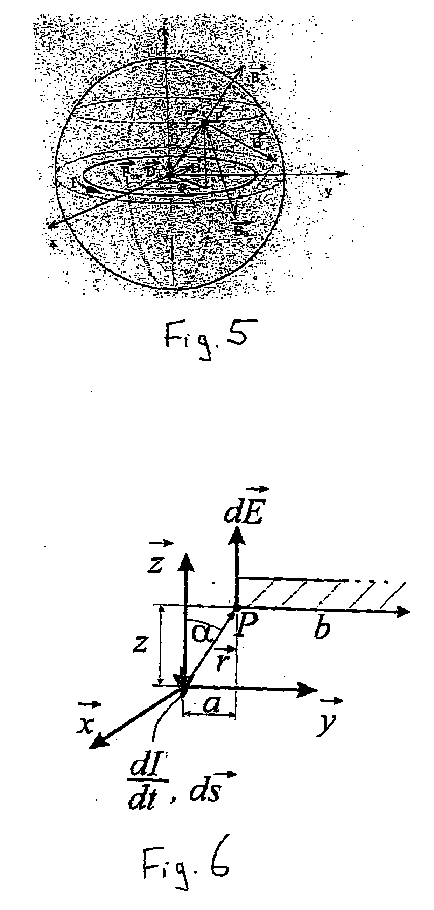

Die Komponenten eines Dipolfelds (siehe Figur 5) in sphärischen Koordinaten sind gegeben durch:

$$B_r = B_0 \frac{2\cos(\theta)}{r^3} \qquad (8)$$

$$B_\theta = B_0 \frac{\sin(\theta)}{r^3} \qquad (9)$$

Das Dipolfeld besitzt Rotationssymmetrie, so dass die Feldlinien der elektrischen Felder, welche durch den zeitlich in der Stärke veränderlichen magnetischen Dipols induziert werden, konzentrische Kreise um die Dipolachse sind. Gemäss der dritten Maxwell Gleichung ist das elektrische Feld vom zeitlich in der Stärke ändernden magnetischen Dipol gemäss Figur 3 gegeben durch:

$$\oint_L \vec{E}d\vec{s} = -\frac{d}{dt}\left(\int_A \vec{B}d\vec{A}\right) \qquad (10)$$

$$B_\varphi = 0$$

Unter Berücksichtigung der Symmetrie zwischen der dritten und der vierten Maxwellgleichung ergibt sich schliesslich für die elektrische Feldstärke:

$$E = \frac{-\dfrac{d}{dt}\left(\int_A \vec{B}d\vec{A}\right)}{2\pi\, r_p} \qquad (11)$$

wobei $r_p$ der Radius des Kreises ist, welches durch den Punkt geht an dem das elektrische Feld berechnet wird. Die Richtung des Feldes ist gegeben durch die Tangente an den Kreis und das Vorzeichen von E.

Das Integral kann auf verschiedenste numerische Arten berechnet werden.

Es ist auch denkbar, dass mehrere Dipolfelder gleichzeitig vorhanden sind. In diesem Fall kann jedes zum jeweiligen Dipol gehörende elektrische Feld berechnet werden und das gesamte elektrische Feld lässt sich aus der Summe der einzelnen Felder berechnen. Auch kann das Feld einer Spule z.B. in höhere Ordnungen als in der Ordnung eines Dipols entwickelt werden (Quadrupol etc.). Dies ändert lediglich die Formeln 8 und 9 und ergibt eine etwas höhere Genauigkeit.

Vierte Methode zur Berechnung des Spannungsabfalls über die Verbindungsstrecken einer Masche

Die vierte Methode basiert auf der Berechnung des elektrischen Feldes in den Zuordnungspunkten aus der Betrachtung der zeitlich veränderlichen Ströme in der Generatoreinheit 200 und Verwendung einer der Biot-Savart-Formel ähnlichen Formel.

Für die nachstehende Herleitung der Formel wird auf die Figur 6 verwiesen, in denen x, y und z die karthesischen Raumkoordinaten bezeichnen.

Wir starten von der Biot-Savart-Formel

$$\vec{B}(P) = \frac{\mu_0}{4\pi}\int_L \frac{Id\vec{s}\times\vec{r}}{r^3} \qquad (12)$$

wobei für *dB* gilt:

$$d\bar{B}(P) = \frac{\mu_0 I}{4\pi} \frac{d\bar{s} \times \bar{r}}{r^3} \qquad (13)$$

Für differentielle Linienströme resultieren keine Komponenten des magnetischen Feldes parallel zur z-Achse. Alle Feldinien sind konzentrische Kreise um die z-Achse in Ebenen, die senkrecht zur z-Achse angeordnet sind. Daraus folgt, dass für alle geschlossenen Linien in zur Z-Achse senkrechten Ebenen der Fluss durch die von den Linien eingeschlossene Fläche gleich Null ist.

Daher führt Maxwells dritte Gleichung zu dem Ergebnis, dass bei Änderung des Stroms I keine elektrische Feldlinien von *E* senkrecht auf z induziert werden.

Mithin sind alle elektrischen Felder, die in Folge von Änderungen des Stromes I induziert werden, parallel zur z-Achse.

Gemäss Fig. 6 ergibt sich *dB* zu

$$\left| d\bar{B}(P) \right| = \frac{\mu_0 I}{4\pi} \frac{ds}{r^2} \sin(\alpha) \qquad (14)$$

Der Fluss *d*Φ durch die markierte Fläche ist

$$d\Phi = \int_{b=0}^{\infty} \frac{\mu_0 I}{4\pi} \frac{ds}{r^2} \sin(\alpha) dh db. \qquad (15)$$

mit dem Ergebnis

$$d\Phi = \frac{\mu_0 I}{4\pi} \frac{ds}{\sqrt{a^2 + z^2}} dh. \qquad (16)$$

$$\oint_L \bar{E} d\bar{s} = -\frac{d}{dt} \left( \int_A \bar{B} d\bar{A} \right) \qquad (17)$$

wobei sich entlang der infinitesimal langen Seiten kein Beitrag (kein elektrisches Feld senkrecht zu z) und entlang der infinitesimalen kurzen Seiten ebenfalls kein Beitrag (aufgrund der grossen Distanz) ergibt. Mithin folgt aus Gleichung 16 und 17

$$Edh = -\frac{d}{dt} (d\Phi) \qquad (18)$$

so dass

$$E = -\frac{d}{dt} \left( \frac{\mu_0 I}{4\pi} \frac{ds}{\sqrt{a^2 + z^2}} \right) = -\frac{\mu_0}{4\pi} \frac{ds}{\sqrt{a^2 + z^2}} \frac{dI}{dt} \qquad (19)$$

worin das Minuszeichen anzeigt, dass das elektrische Feld und die Stromänderung in entgegengesetze Richtungen zeigen. Schliesslich erhalten wir:

$$d\bar{E} = -\frac{d}{dt}\left(\frac{\mu_0 I}{4\pi}\frac{d\bar{s}}{\sqrt{a^2+z^2}}\right) = -\frac{\mu_0}{4\pi}\frac{d\bar{s}}{\sqrt{a^2+z^2}}\frac{dI}{dt} \qquad (20)$$

Somit ist das elektrische Feld gegeben durch das Integral über die gesamte Leiterlänge L:

$$\bar{E} = -\frac{\mu_0}{4\pi}\int_L \frac{d\bar{s}}{\sqrt{a^2+z^2}}\frac{dI}{dt} \qquad (21)$$

worin
a = Länge der Projektion der Strecke ds zu P auf die x-y-Ebene und
z = Komponente von P in Z-Richtung.
Es kann auch hier geltend gemacht werden, dass der Strom in den Spulen des Feldgenerators gegeben ist durch

$$I = \int_A \vec{j}d\vec{A}$$

welches in Formel 22 eingesetzt werden kann. Daraus wird ersichtlich, dass auch eventuelle elektrische Feldaufbaueffekte des Feldgenerators als zweiter Term zur Formel 21 noch hinzugefügt werden könnte.
In zweiter Näherung kann bei dem Verfahren die Summe aus dem direkt von der Generatoreinheit 200 erzeugten Wechselfeldes 210 und dem berechneten Störfeld verwendet werden- diese iterative Vorgehensweise kann beliebig fortgesetzt werden. Es ist jedoch in den meisten Anwendungen eine erste Näherung hinreichend genau.
Fig. 4 zeigt, in vereinfachter Darstellung, ein Struktogramm eines nach dem erfindungsgemässen arbeitenden Computerprogramms. Die einzelnen Verarbeitungsschritte wurden bereits oben ausführlich erläutert.
Das erfindungsgemässe Verfahren kann auch vorzüglich für Objekte mit Öffnungen (Löcher) angewendet werden, wobei die Anzahl der Öffnungen beliebig sein kann.

**Patentansprüche**

1. Verfahren zur Bestimmung der Position eines Sensorelementes (300), mit Hilfe dessen ein von mindestens einer Generatoreinheit (200) ausgesendetes magnetisches Wechselfeld (210) gemessen wird, wobei bei dem verfahren

   - aufgrund eines im Sensorelement (300) empfangenen Signals die Position des Sensorelementes (300) bestimmt wird,
   - Störfelder (410) berechnet werden, welche aufgrund von in elektrisch leitenden Objekten (400) erzeugten Wirbelströmen (420) entstehen,
   - die Position, welche ausgehend vom im Sensorelement (300) empfangenen Signal bestimmbar ist, aufgrund der berechneten Störfelder (410) korrigiert wird, wobei zunächst
   - die Wirbelströme (420) berechnet werden, und anschliessend
   - die Störfelder (410), ausgehend von den berechneten Wirbelströmen (420) berechnet werden, **dadurch gekennzeichnet, dass** bei dem verfahren
   - zumindest ein Bereich mindestens je eines Objekts (400) in zumindest nahezu geschlossene Maschen ($M_i$) von ansonsten beliebiger Form aufgeteilt wird,
   - den geschlossenenen Maschen ($M_i$) jeweils mindestens ein Widerstandswert ($R_{ij}$) zugeordnet wird und
   - auf der Grundlage der in den den geschlossenen Maschen ($M_i$) abfallenden Spannungen und der Widerstandswerte ($R_{ij}$) beispielsweise mit Hilfe der Kirchhoffschen Maschenregel die Wirbelströme (420) in den geschlossenen Maschen ($M_i$) berechnet werden.

2. Verfahren nach Anspruch 1, **dadurch gekennzeichnet, dass** in einem Bereich des Objekts (400) Stützpunkte ($P_i$) gewählt und die geschlossenen Maschen ($M_i$) jeweils durch die Verbindung von mindestens drei Stützpunkten ($P_i$) gebildet werden, so dass die geschlossenen Maschen ($M_i$) jeweils aus Verbindungsstrecken ($G_{ij}$) zwischen jeweils zwei Stützpunkten ($P_i$), ($P_j$) bestehen und dass jeweils mindestens einem Zuordnungspunkt ($Z_{ij}$), der auf den Ver-

bindungsstrecken ($G_{ij}$) oder in der Nähe der Verbindungsstrecken ($G_{ij}$) liegt, ein Widerstandswert ($R_{ij}$) zugeordnet wird, wobei es sich bei den Verbindungsstrecken ($G_{ij}$) beispielsweise um Verbindungsgeraden handelt.

3.  Verfahren nach Anspruch 1 oder 2, **dadurch gekennzeichnet, dass** der Spannungsabfall in den geschlossenen Maschen ($M_i$) ausgehend von der zeitlichen Ableitung des magnetischen Flusses durch die von den geschlossenen Maschen ($M_i$) eingeschlossenen Flächen berechnet wird.

4.  Verfahren nach Anspruch 2, **dadurch gekennzeichnet, dass** ein von der mindestens einen Generatoreinheit (200) erzeugtes elektrisches Feld in jeweils mindestens einem Punkt, der auf den Verbindungsstrecken ($G_{ij}$) oder in der Nähe der Verbindungsstrecken ($G_{ij}$) liegt, beispielsweise in dem mindestens einen Zuordnungspunkt ($Z_{ij}$), berechnet wird und dass ausgehend von dem elektrischen Feld der Spannungsabfall über die Verbindungsstrecken($G_{ij}$) berechnet wird.

5.  Verfahren nach Anspruch 4, **dadurch gekennzeichnet, dass** das elektrische Feld nach folgender Formel berechnet wird:

$$\bar{E}(P) = -\frac{1}{4\pi} \int \frac{\frac{d}{dt}\left(\int_A \bar{B}d\bar{A}\right)d\bar{s} \times \bar{r}}{r^3}$$

die sich bei Berücksichtigung der Symmetrie zwischen der dritten und der vierten Maxwellgleichung daraus ergibt, dass der Berechnung des magnetischen Erregerfeldes eine Formel zugrundeliegt, die neben dem Biot-Savart-Term einen zusätzlichen Term enthält, durch welchen berücksichtigt wird, dass das magnetische Feld der Generatoreinheit (200) auch von einem allfälligen elektrischen Feldaufbau der Generatoreinheit (200) abhängt.

6.  Verfahren nach Anspruch 4, **dadurch gekennzeichnet, dass** das elektrische Feld nach folgender Formel berechnet wird

$$\bar{E} = -\frac{\mu_0}{4\pi} \int_L \frac{d\bar{s}}{\sqrt{a^2 + z^2}} \frac{dI}{dt}$$

die sich aus der Betrachtung der zeitlich veränderlichen Ströme in der Generatoreinheit (200) und Verwendung einer der Biot-Savart-Formel ähnlichen Formel ergibt.

7.  Verfahren nach Anspruch 4, **dadurch gekennzeichnet, dass** die mindestens eine Generatoreinheit (200) eine Spule umfasst, die Spule in den Zuordnungspunkten ($Z_{ij}$) näherungsweise als Dipol aufgefasst wird und mithin das elektrische Feld durch folgende Formel berechnet wird:

$$E = \frac{-\frac{d}{dt}\left(\int_A \bar{B}d\bar{A}\right)}{2\pi\, r_P}$$

8.  Verfahren nach einem der Ansprüche 1 bis 7, **dadurch gekennzeichnet, dass** zur weiteren Verbesserung der Positionsbestimmung mindestens eine weitere Iteration durchgeführt wird, indem weitere Wirbelströme im Objekt (400), ausgehend von berechneten Störfeldern (410), berechnet werden und weitere Störfelder, ausgehend von den weiteren wirbelströmen, berechnet werden.

9.  Anwendung des Verfahrens nach einem der Ansprüche 1 bis 8 für die magnetfeldorientierte Ortung bei "Cyber Space"-Anwendungen.

**10.** Vorrichtung zur Durchführung des Verfahrens nach Anspruch 1 bis 8, **dadurch gekennzeichnet, dass** mindestens eine Feldgeneratoreinheit (200), mindestens ein Sensorelement (300) und eine Verarbeitungs- und Steuereinheit (100) vorgesehen sind, wobei die Feldgeneratoreinheit (200) und das Sensorelement (300) mit der Verarbeitungs- und Steuereinheit (100) verbunden sind.

**11.** Vorrichtung nach Anspruch 10, **dadurch gekennzeichnet, dass** mindestens ein elektrisch leitendes Objekt zum Abschirmen der Feldgeneratoreinheit (200) vorgesehen ist.

**12.** Computerprogrammprodukt, das in den internen Speicher eines digitalen Computers geladen werden kann und Softwarecodeabschnitte umfasst, mit denen die Schritte gemäss den Ansprüchen 1 bis 8 ausgeführt werden, wenn das Produkt auf einem Computer läuft.

Fig. 1

Fig. 2

Fig. 3

Fig. 4

Fig. 5

Fig. 6

**Europäisches Patentamt**

**EUROPÄISCHER RECHERCHENBERICHT**

Nummer der Anmeldung

EP 05 00 4448

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | WO 02/08793 A (MEDNETIX AG; SEILER, PAUL, G; MUENCH, RALPH, K; KIRSCH, STEFAN) 31. Januar 2002 (2002-01-31) * Seite 7, Zeile 6 - Seite 14, Zeile 14; Abbildungen 1,2 * ----- | 1,3,8-12 | G01V3/08 |
| A | TURNER I R ET AL: "Developments of the eddy-current program EDDYNET" COMPUMAG COMMUNICATIONS PROCEEDINGS LABORATOIRE D'ELECTROTECHNIQUE GRENOBLE, FRANCE, 1978, Seiten 1-15, XP008060720 * Seite 2 - Seite 6 * ----- | 2,4 | |
| A | HART F X ET AL: "Eddy current distributions: their calculation with a spreadsheet and their measurement with a dual dipole antenna probe" AMERICAN JOURNAL OF PHYSICS USA, Bd. 59, Nr. 5, Mai 1991 (1991-05), Seiten 461-467, XP008060714 ISSN: 0002-9505 * Seite 462, linke Spalte, letzter Absatz - Seite 464, linke Spalte, Absatz 2 * ----- | 2,4 | |

**RECHERCHIERTE SACHGEBIETE (IPC)**

G01V
A61B
G01B

Der vorliegende Recherchenbericht wurde für alle Patentansprüche erstellt

| Recherchenort | Abschlußdatum der Recherche | Prüfer |
|---|---|---|
| Den Haag | 28. Februar 2006 | Häusser, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 00 4448

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2006

| Im Recherchenbericht angeführtes Patentdokument | Datum der Veröffentlichung | Mitglied(er) der Patentfamilie | | Datum der Veröffentlichung |
|---|---|---|---|---|
| WO 0208793 A | 31-01-2002 | AT | 312364 T | 15-12-2005 |
| | | AU | 6725401 A | 05-02-2002 |
| | | CA | 2441226 A1 | 31-01-2002 |
| | | CN | 1459030 A | 26-11-2003 |
| | | EP | 1303771 A1 | 23-04-2003 |
| | | JP | 2004505253 T | 19-02-2004 |
| | | US | 2003200052 A1 | 23-10-2003 |

EPO FORM P0461

Für nähere Einzelheiten zu diesem Anhang : siehe Amtsblatt des Europäischen Patentamts, Nr.12/82